# EUROPÄISCHE PATENTANMELDUNG

(11) **EP 2 082 652 A1**
(43) Veröffentlichungstag der Anmeldung: **29.07.2009**
(21) Anmeldenummer: 09000759.2
(22) Anmeldetag: 21.01.2009
(51) Int. Cl.: A24C 5/34, G01N 1/02

(54) **Entnahme von einzelnen stabförmigen Artikeln der Tabak verarbeitenden Industrie aus einem Massenstrom**

(30) Priorität: 24.01.2008 DE 102008005964
(71) Anmelder: HAUNI Maschinenbau AG, 21033 Hamburg (DE)
(72) Erfinder: Röhl, Thomas, 21077 Hamburg (DE); Schmid-Dörnte, Jürgen, 48346 Ostbevern (DE)
(74) Vertreter: Grebner, Christian Georg Rudolf

(57) **Zusammenfassung**

Die Erfindung betrifft ein Verfahren zum Entnehmen von einzelnen stabförmigen Artikeln der Tabak verarbeitenden Industrie, insbesondere Filterzigaretten, aus einem Artikelmassenstrom (18) mittels einer Entnahmevorrichtung (11), wobei der Artikelmassenstrom (18) mit den im Artikelmassenstrom (18) längsaxial parallel zueinander angeordneten Artikeln entlang einem linearen, vorzugsweise horizontalen, Förderabschnitt (12) mit einer vorbestimmten Fördergeschwindigkeit, vorzugsweise kontinuierlich, gefördert wird.

Das Verfahren wird dadurch weitergebildet, dass während der Entnahme die Entnahmevorrichtung (11) parallel mit dem Artikelmassenstrom (18), vorzugsweise mit der gleichen Fördergeschwindigkeit des Artikelmassenstroms (18), mitbewegt wird und einzelne stabförmige Artikel vereinzelt oder in einem Artikelpaket mit mehreren Artikeln aus dem Artikelmassenstrom (18) von der Entnahmevorrichtung (11) erfasst werden und quer zur Förderrichtung des Artikelmassenstroms (18), vorzugsweise in einer senkrechten Richtung zur Förderrichtung des Artikelmassenstroms (18), mittels der Entnahmevorrichtung (11) aus dem Artikelmassenstrom (18) entfernt werden.

## Beschreibung

Die Erfindung betrifft ein Verfahren zum Entnehmen von einzelnen stabförmigen Artikeln der Tabak verarbeitenden Industrie, insbesondere Filterzigaretten, aus einem Artikelmassenstrom mittels einer Entnahmevorrichtung, wobei der Artikelmassenstrom mit den im Artikelmassenstrom längsaxial parallel zueinander angeordneten Artikeln entlang einem linearen, vorzugsweise horizontalen, Förderabschnitt mit einer vorbestimmten Fördergeschwindigkeit, vorzugsweise kontinuierlich, gefördert wird. Ferner betrifft die Erfindung eine Verwendung eines Knickarm-Roboters.

Nach der Herstellung von Filterzigaretten beispielsweise an einer Filteransetzmaschine werden die fertig hergestellten Filterzigaretten in einem Massenstrom auf einem Förderer zu einem Zigarettenspeicher oder zu einer Weiterverarbeitungsmaschine, z.B. einer Packmaschine, gefördert. Um die Qualität der Herstellung der Filterzigaretten zu überwachen und eine Qualitätskontrolle durchzuführen, werden in festgelegten Zeitabständen einzelne Filterzigaretten aus der Produktionslinie entnommen, um diese in einer separaten Prüfstation hinsichtlich der Abmessungen des Materials und/oder weiterer relevanter Kriterien zu prüfen. Hierbei werden einzelne Filterzigaretten aus dem dicht gepackten Massenstrom mit Filterzigaretten entnommen, wobei im Massenstrom die Filterzigaretten übereinander gestapelt sind. Die Entnahme von Prüfzigaretten aus dem Massenstrom kann durch das Bedienungspersonal manuell ausgeführt werden. Darüber hinaus ist aus DE 38 12 039 A1 eine Entnahmevorrichtung zum Abziehen von Prüfzigaretten aus einem Artikelmassenstrom bekannt.

Ausgehend von diesem Stand der Technik besteht die Aufgabe der vorliegenden Erfindung darin, die automatische Entnahme von einzelnen stabförmigen Artikeln aus einem dicht gepackten Artikelmassenstrom zu verbessern, wobei die stichprobenartige Entnahme von Artikeln möglichst schonend sein soll und insbesondere die automatische Entnahme der Artikel auf die Bewegung des Artikelstroms im Wesentlichen ungestört bleiben soll.

Gelöst wird diese Aufgabe durch ein Verfahren zum Entnehmen von einzelnen stabförmigen Artikeln der Tabak verarbeitenden Industrie, insbesondere Filterzigaretten, aus einem Artikelmassenstrom mittels einer Entnahmevorrichtung, wobei der Artikelmassenstrom mit den im Artikelmassenstrom längsaxial parallel zueinander angeordneten Artikeln entlang einem linearen, vorzugsweise horizontalen, Förderabschnitt mit einer vorbestimmten Fördergeschwindigkeit, vorzugsweise kontinuierlich, gefördert wird, das dadurch weitergebildet wird, dass während der Entnahme von Artikeln die Entnahmevorrichtung parallel mit dem Artikelmassenstrom, vorzugsweise mit der gleichen Fördergeschwindigkeit des Artikelmassenstroms, mitbewegt wird und einzelne stabförmige Artikel vereinzelt oder in einem Artikelpaket mit mehreren Artikeln aus dem Artikelmassenstrom von der Entnahmevorrichtung erfasst werden und quer zur Förderrichtung des Artikelmassenstroms, vorzugsweise in einer senkrechten Richtung zur Förderrichtung des Artikelmassenstroms, mittels der Entnahmevorrichtung aus dem Artikelmassenstrom entfernt werden.

Die Erfindung beruht auf dem Gedanken, dass die Entnahmevorrichtung eine parallel gerichtete Linearbewegung zu dem ebenfalls linear geförderten Artikelmassenstrom ausführt und während der parallel gerichteten Linearbewegung der Entnahmevorrichtung zum Artikelmassenstrom einzelne Artikel erfasst werden und anschließend schonend aus dem Artikelstrom entnommen werden. Gemäß der Erfindung folgt die Entnahmevorrichtung dem Artikelmassenstrom.

Unter einem Artikelmassenstrom wird im Rahmen der Erfindung ein Massenstrom von übereinander und nebeneinander gestapelten stabförmigen Artikeln verstanden, wobei die Längsachsen der stabförmigen Artikel im dicht gestapelten Paket des Massenstroms in einem Linearförderabschnitt parallel zueinander ausgerichtet sind. Vorzugsweise werden die Artikel im Artikelmassenstrom in queraxialer Richtung, d.h. senkrecht zu ihrer Längsausrichtung, auf einem Förderer, z.B. Bandförderer oder dergleichen, linear gefördert. Typischerweise beträgt die Höhe eines Artikelmassenstroms ein Mehrfaches des Durchmessers einer jeden einzelnen Filterzigarette bzw. eines stabförmigen Artikels.

Aufgrund der Parallelführung der Entnahmevorrichtung im Hinblick auf die Förderrichtung des Artikelmassenstroms werden die zu entnehmenden Artikel schonend und sanft aus dem Artikelmassenstrom entfernt, wobei die längsaxiale Ausrichtung der zu entnehmenden Artikel und der im Massenstrom verbleibenden Artikel während des Entnahmevorgangs keine Änderung erfährt. In Relation zu dem sich bewegenden Massenstrom wird hierbei der zu entnehmende Artikel in längsaxialer Richtung bewegt oder in einer nicht parallelen Richtung zur Förderrichtung des Artikelmassenstroms entnommen. Vorzugsweise wird hierbei der zu entnehmende Artikel in Bezug auf den sich bewegenden Artikelmassenstrom beispielsweise nach oben bewegt.

Wenn im vorliegenden Zusammenhang von der Entnahme von einzelnen Artikeln bzw. Filterzigaretten die Rede ist, so ist damit im Rahmen der vorliegenden Erfindung darunter auch zu verstehen, dass sowohl stabförmige Artikel vereinzelt entnommen werden oder in einem Artikelpaket, wobei die Anzahl der entnommenen Zigaretten bzw. stabförmigen Artikeln im Vergleich zu der Anzahl der Artikel im Artikelmassenstrom sehr klein ist.

So ist in einer Weiterbildung des Verfahrens vorgesehen, dass die Artikel aus dem sich, vorzugsweise horizontal, bewegenden Artikelmassenstrom durch eine Querbewegung der Entnahmevorrichtung zur Förderrichtung des Artikelmassenstroms unter Beibehaltung der parallel zur Förderrichtung des Artikelmassenstroms geführten Bewegung der Entnahmeeinrichtung entnommen werden. Dadurch, dass die Entnahmevorrichtung während des Entnahmevorgangs der linearen Bewegung des Massenstroms für eine vorbestimmte Zeitdauer bzw. eine vorbestimmte Förderstrecke im Wesentlichen parallel folgt, wird zudem auch durch die kompakte Anordnung sowie Lage bzw. Ausrichtung der Artikel des Artikelmassenstroms durch den Entnahmevorgang beibehalten bzw. nicht gestört.

Zudem zeichnet sich eine Weiterbildung des Verfahrens dadurch aus, dass die Artikel aus dem, insbesondere horizontal und kontinuierlich geförderten, Artikelmassenstrom in queraxialer Richtung nach oben oder längsaxial seitlich entnommen werden.

Um beispielsweise hergestellte Filterzigaretten zu prüfen, ist es in einer Weiterbildung des Verfahrens vorgesehen, dass die aus dem Artikelmassenstrom entnommenen stabförmigen Artikel an eine Prüfeinrichtung übergeben werden, um die Qualität der entnommenen Artikel in Bezug auf qualitätsrelevante Parameter, wie z. B. Durchmesser, Gewicht usw., zu prüfen.

Bevorzugterweise wird der Artikelmassenstrom zwischen einer Artikelherstellmaschine, insbesondere Filteransetzmaschine, und einer Artikelweiterverarbeitungsmaschine oder einem Artikelspeicher oder zwischen einem Artikelspeicher und einer Artikelweiterverarbeitungsmaschine, vorzugsweise in einem Förderabschnitt eines Förderers oder in einer Sichtstrecke horizontal, gefördert. Hierdurch wird eine einfache Entnahme von Prüfzigaretten nach dem Herstellungsprozess an einer Filteransetzmaschine erreicht, wobei die hergestellten Filterzigaretten in einem Massenstrom zu einem Zigarettenspeicher oder beispielsweise zu einer Packmaschine gefördert werden.

Eine vereinfachte Handhabung bei der Entnahme der Artikel ergibt sich dadurch, wenn die Artikel aus dem Artikelmassenstrom mittels einer Entnahmevorrichtung an einem Arm eines Knickarm-Roboters mit wenigstens vier Bewegungsfreiheitsgraden, insbesondere fünf oder sechs Bewegungsfreiheitsgraden, entnommen werden. Durch den Einsatz eines Knickarm-Roboters wird in Kombination mit der an einem Arm des Knickarm-Roboters angeordneten Entnahmevorrichtung eine einfache und reaktionsschnelle Entnahmeeinrichtung bereitgestellt, wobei eine hohe Positionsgenauigkeit der Entnahmevorrichtung an einem Artikelstrom erreicht wird, um gezielt einzelne Filterzigaretten bzw. stabförmige Artikel aus einem Massenstrom zu entnehmen. Durch die Verwendung eines Knickarm-Roboters mit mindestens vier Freiheitsgraden wird gewährleistet, dass die Entnahmevorrichtung parallel zur Förderrichtung des Massenstroms geführt wird bzw. folgt. Unter Freiheitsgraden des Knickarm-Roboters werden Bewegungsachsen verstanden, um die die entsprechenden Bewegungselemente, z.B. Arme oder dergleichen, bewegt bzw. gedreht werden können.

Wenn im vorliegenden Zusammenhang von Knickarm-Robotern die Rede ist, werden hierunter auch steuerbare oder selbstlernende, d.h. beispielsweise mit einem neuronalen Netzwerk ausgestattete, Knickarm-Roboter verstanden, die aufgrund des neuronalen Netzwerkes selbständig die Positionen korrigieren, wodurch eine hohe Präzision in der Ausführung von Bewegungen erreicht wird.

Darüber hinaus zeichnet sich eine Ausführungsform des Verfahrens dadurch aus, dass der eingesetzte Knickarm-Roboter als, vorzugsweise mobiler und nicht-ortsfest ausgebildeter, Roboter an dem Förderabschnitt eines, vorzugsweise linear fördernden, Förderers für eine vorbestimmte Zeitdauer angeordnet wird. Dadurch, dass der Knickarm-Roboter nicht dauerhaft bzw. nicht fest an einer Förderstrecke ausgebildet oder angeordnet ist, ist es möglich, den Knickarm-Roboter nach der Entnahme an einer ersten Förderstrecke oder an dem ersten Förderabschnitt einer Produktionslinie zu einer anderen Förderstrecke einer zweiten Produktionslinie zu bewegen, um an der zweiten Produktionslinie aus einem Artikelmassenstrom entsprechende Probenentnahmen von Artikeln vorzunehmen. Durch die Verwendung eines mobilen und beweglichen, d.h. nicht ortsfest angeordneten Knickarm-Roboters, wird ein hoher Flexibilisierungsgrad bei der Entnahme von Proben aus mehreren Förderstrecken erreicht, da der Knickarm-Roboter mit der Entnahmevorrichtung nacheinander an mehreren Massenströmen eingesetzt werden kann, wodurch auch verschiedene Produktströme auf einfache Weise engmaschig überwacht werden.

Überdies wird durch den Einsatz eines Knickarm-Roboters für verschiedene Massenströme in mehreren Produktlinien der Kostenaufwand für die Produktüberwachung bzw. Qualitätskontrolle von Filterzigaretten deutlich abgesenkt, wodurch sich eine besonders effektive Aufstellung und Anordnung eines Entnahmesystems ergibt. Der Knickarm-Roboter kann dabei aus mehreren, gleichzeitig laufenden Artikelmassenströmen abwechselnd Artikel entnehmen und einem gemeinsamen Prüfsystem oder einer gemeinsamen Prüfeinrichtung zuführen.

Dabei kann in einer Ausgestaltung die Prüfeinrichtung oder Messeinrichtung für die aus den Massenströmen entnommenen Artikel beweglich angeordnet sein, so dass die Prüfeinrichtung und der Roboter nicht dauerhaft an den Produktionsmaschinen oder den Fördereinrichtungen vorhanden sein müssen.

Dazu ist es weiterhin von Vorteil, wenn bei Anordnung des Knickarm-Roboters an einen Förderabschnitt anhand eines Referenzpunkts zu diesem Förderabschnitt der Knickarm-Roboter zur Steuerung der Bewegungsführung der an einem Armende angeordneten Entnahmevorrichtung entsprechende Bewegungssteuerbefehle erhält. Durch den individuellen, maschinenspezifischen Referenzpunkt an einer Produktionslinie oder an einer Maschine sowie an einer Fördereinrichtung wird der Knickarm-Roboter anhand des Referenzpunktes geometrisch kalibriert, wobei dem Knickarm-Roboter die maschinenspezifischen Merkmale entsprechend beispielsweise durch einen Barcode oder ein anderes Identifikationsobjekt mitgeteilt werden. Dabei kann die Datenübertragung der Bewegungssteuerbefehle auch mittels einer (auch drahtlosen) Datenverbindung zum Knickarm-Roboter erfolgen.

Insbesondere wird nach Erhalt der Bewegungssteuerbefehle die Entnahmevorrichtung zum Artikelmassenstrom ausgerichtet und/oder an den Artikelmassenstrom auf der Basis von vorbestimmten bzw. definierten Algorithmen bahngesteuert an den Artikelmassenstrom angenähert und parallel zum Artikelmassenstrom geführt.

Nach Ausrichtung und Annäherung der Entnahmevorrichtung ist in einer Ausgestaltung außerdem vorgesehen, dass mittels einer Detektionseinrichtung an der Entnahmevorrichtung eine oder mehrere zu entnehmende Artikel im Artikelmassenstrom detektiert werden und anschließend diese von der Entnahmevorrichtung aufgenommen werden.

Die Entnahme von den Artikeln aus dem Massenstrom kann beispielsweise durch eine Absaugung von oben mittels einer Aufnahmevorrichtung erfolgen. Darüber hinaus ist es in einer Ausgestaltung möglich, die zu entnehmenden Artikel aus der Seite, vorzugsweise auf der Filterseite von Filterzigaretten, durch Ansaugen einer oder mehrerer Zigaretten aus dem sich bewegenden Artikelmassenstrom zu entnehmen. Darüber hinaus ist es in einer weiteren Ausführungsform bei der Entnahme möglich, dass die Entnahmevorrichtung mit einem taktilen Greifer in den Materialstrom eingreift und ein Artikelpaket aus dem Massenstrom heraushebt. Bei der Entnahme der stabförmigen Artikel aus dem Massenstrom wird hierbei die Entnahmevorrichtung synchron zur Förderbewegung des Artikelstroms ausgeführt, wodurch die Artikel aus dem geförderten Artikelstrom entnommen werden, ohne den weiteren Materialfluss im Artikelstrom oder die Lage sowie Ausrichtung der im Massenstrom verbleibenden Artikel zu ändern oder zu stören. Hierbei folgt der Roboter bzw. die Entnahmevorrichtung des Roboters der Transportgeschwindigkeit des Massenstroms synchron.

Außerdem zeichnet sich das Verfahren dadurch aus, dass die Artikel mittels einer als Greifer oder mit einer Saugeinrichtung ausgebildeten Entnahmevorrichtung aus dem Artikelmassenstrom entnommen werden.

Ferner wird die Aufgabe gelöst durch die Verwendung eines Knickarm-Roboters zur Entnahme von einzelnen stabförmigen Artikeln der Tabak verarbeitenden Industrie, insbesondere Filterzigaretten, aus einem Artikelmassenstrom, wobei das Verfahren zur Entnahme von einzelnen stabförmigen Artikeln, wie voranstehend beschrieben, ausgeführt wird. Zur Vermeidung von Wiederholungen wird auf die obigen Ausführungen ausdrücklich verwiesen.

Die Erfindung wird nachstehend ohne Beschränkung des allgemeinen Erfindungsgedankens anhand eines Ausführungsbeispiels unter Bezugnahme auf die Zeichnung exemplarisch beschrieben. Es zeigt:

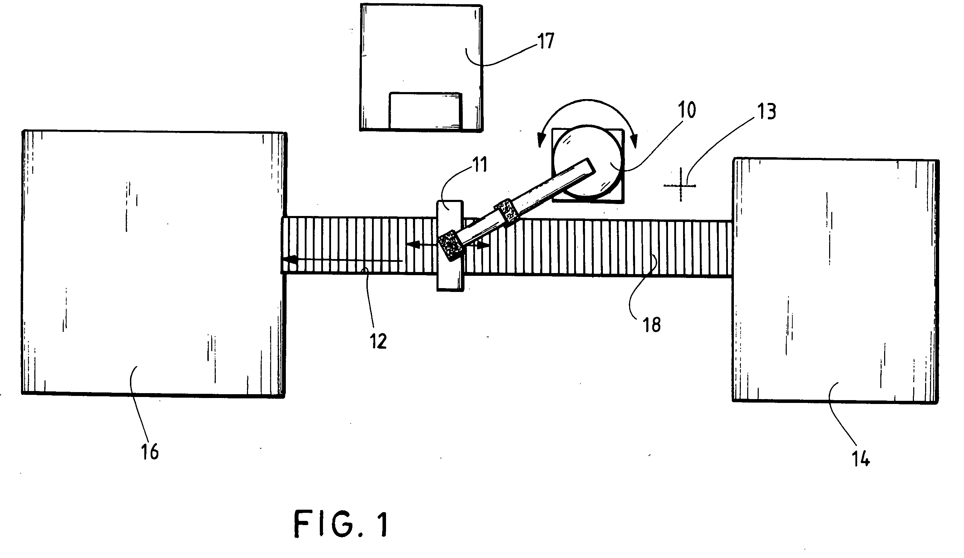

- Fig. 1: Draufsicht auf eine erfindungsgemäße Anordnung eines Roboters an einer Förderstrecke

Fig. 1 zeigt eine Draufsicht auf eine erfindungsgemäße Anordnung eines mobilen Knickarm-Roboters 10 an einer Sichtstrecke bzw. horizontalen Förderstrecke 12. Die lineare Förderstrecke 12 ist zwischen einer Filteransetzmaschine 14 und einer Übertragungseinrichtung 16 (Rod Transfer System RTS), die einen Massenstrom der an der Filteransetzmaschine 14 hergestellten Filterzigaretten in einen anschließenden Speicher (Flexible Mass Follow Reservoir FMR) überführt. Die Förderstrecke 12 ist vorzugweise horizontal ausgebildet, so dass auf der Förderstrecke 12 ein dicht gepackter Massenstrom 18 mit Filterzigaretten, die dichtgestapelt übereinander und nebeneinander angeordnet sind, in queraxialer Richtung zu der Übertragungseinrichtung gefördert werden.

Im dicht gepackten Massenstrom 18 sind die Filterzigaretten längsaxial zueinander ausgerichtet, wobei im Massenstrom 18 mehrere Lagen von Artikeln bzw. Filterzigaretten übereinander angeordnet sind.

Der Knickarm-Roboter 10 verfügt über mehrere Arme bzw. Bewegungselemente, die um entsprechende Achsen jeweils bewegt werden können. Vorzugsweise verfügt der Knickarm-Roboter über vier, fünf oder sechs Bewegungsfreiheitsgrade. Am Ende eines Bewegungsarms ist ein Greifer 11 angeordnet, mittels dem einzelne Filterzigaretten aus dem Massenstrom 18 entnommen werden.

Um die Filterzigaretten aus dem Massenstrom 18 zu entnehmen, wird der Knickarm-Roboter 10 zu einem an der Förderstrecke 12 vorgesehenen Referenzpunkt 13 bewegt, an dem der Knickarm-Roboter 10, der vorzugsweise als selbstlernender Roboter ausgebildet ist, entsprechende Bewegungssteuerbefehle bzw. maschinenspezifische bzw. Referenzdaten zur Förderstrecke 12 erhält, um anschließend sich vorzugsweise selbst zu referenzieren bzw. eine geometrische Kalibrierung durchzuführen, so dass im Anschluss daran eine entsprechende Position entlang der Förderstrecke 12 ausgewählt und eingenommen wird und der Greifer 11 an den Massenstrom 18 bahngesteuert angesteuert wird.

Nach der Annäherungsphase des Greifers 11 wird der Greifer 11 entsprechend der Förderrichtung des Massenstroms 18 synchron und parallel gerichtet mit dem Massenstrom 18 mitgeführt, so dass während dieser gleichförmigen parallelen Führung des Greifers 11 zum Massenstrom 18 mittels eines Detektors am Greifer 11 entsprechende Filterzigaretten im Massenstrom 18 detektiert werden und vom Greifer 11 anschließend erfasst werden.

Nach der Erfassung von einzelnen Filterzigaretten oder einem Artikelpaket wird der Greifer 11 unter Beibehaltung der gleichförmigen Translationsbewegung in Richtung des Massenstroms 18 nach oben bewegt, um schonend die erfassten Filterzigaretten aus dem Massenstrom 18 herauszunehmen. Anschließend werden die entnommenen Filterzigaretten an eine, vorzugsweise mobilen, Prüfeinrichtung 17 übergeben. Für die Entnahme einzelner Filterzigaretten ist der Knickarm-Roboter 10 mit einer entsprechenden Sensorik und mit entsprechenden, beispielsweise mechanischen oder pneumatischen, Aufnahmen versehen.

Nach einer vorgenommenen Probenentnahme an der Förderstrecke 12 kann der Knickarm-Roboter 10 zu einer anderen Förderstrecke an einer weiteren Produktionslinie verbracht werden, um an der zweiten Produktionslinie eine Entnahme von Proben vorzunehmen. Dadurch, dass der Knickarm-Roboter 10 als mobiler Roboter ausgebildet ist, kann dieser auch zu weiteren Maschinen oder Produktionslinien verschoben werden, wobei der Roboter 10 anhand eines jeweiligen Referenzpunkts an den Förderstrecken bzw. Sichtstrecken unter Berücksichtigung der räumlichen Verhältnisse an der entsprechenden Sichtstrecke eine erfindungsgemäße Entnahme von Filterzigaretten vornehmen kann. Die Ausrichtung und Steuerung des Knickarm-Roboters 10 kann anhand der Referenzpunkte und einer entsprechenden Übermittlung von spezifischen Steuerungsdaten zu der jeweiligen Sichtstrecke erfolgen.

### Bezugszeichenliste

- 10: Knickarm-Roboter
- 11: Greifer
- 12: Förderstrecke
- 13: Referenzpunkt
- 14: Filteransetzmaschine
- 16: Übertragungseinrichtung
- 17: Prüfeinrichtung
- 18: Massenstrom

## Patentansprüche

1. Verfahren zum Entnehmen von einzelnen stabförmigen Artikeln der Tabak verarbeitenden Industrie, insbesondere Filterzigaretten, aus einem Artikelmassenstrom (18) mittels einer Entnahmevorrichtung (11), wobei der Artikelmassenstrom (18) mit den im Artikelmassenstrom (18) längsaxial parallel zueinander angeordneten Artikeln entlang einem linearen, vorzugsweise horizontalen, Förderabschnitt (12) mit einer vorbestimmten Fördergeschwindigkeit, vorzugsweise kontinuierlich, gefördert wird, **dadurch gekennzeichnet, dass** während der Entnahme die Entnahmevorrichtung (11) parallel mit dem Artikelmassenstrom (18), vorzugsweise mit der gleichen Fördergeschwindigkeit des Artikelmassenstroms (18), mitbewegt wird und einzelne stabförmige Artikel vereinzelt oder in einem Artikelpaket mit mehreren Artikeln aus dem Artikelmassenstrom (18) von der Entnahmevorrichtung (11) erfasst werden und quer zur Förderrichtung des Artikelmassenstroms (18), vorzugsweise in einer senkrechten Richtung zur Förderrichtung des Artikelmassenstroms (18), mittels der Entnahmevorrichtung (11) aus dem Artikelmassenstrom (18) entfernt werden.

2. Verfahren nach Anspruch 1, **dadurch gekennzeichnet, dass** die Artikel aus dem sich, vorzugsweise horizontal, bewegenden Artikelmassenstrom (18) durch eine Querbewegung der Entnahmevorrichtung (11) zur Förderrichtung des Artikelmassenstroms (18) unter Beibehaltung der parallel zur Förderrichtung des Artikelmassenstroms (18) geführten Bewegung der Entnahmevorrichtung (11) entnommen werden.

3. Verfahren nach Anspruch 2, **dadurch gekennzeichnet, dass** die Artikel aus dem, insbesondere horizontal und kontinuierlich geförderten, Artikelmassenstrom (18) in queraxialer Richtung nach oben oder längsaxial seitlich entnommen werden.

4. Verfahren nach einem der Ansprüche 1 bis 3, **dadurch gekennzeichnet, dass** die aus dem Artikelmassenstrom (18) entnommenen Artikel an eine Prüfeinrichtung (17) übergeben werden.

5. Verfahren nach einem der Ansprüche 1 bis 4, **dadurch gekennzeichnet, dass** der Artikelmassenstrom (18) zwischen einer Artikelherstellmaschine (14), insbesondere Filteransetzmaschine (14), und einer Artikelweiterverarbeitungsmaschine oder einem Artikelspeicher oder zwischen einem Artikelspeicher und einer Artikelweiterverarbeitungsmaschine, vorzugsweise in einem Förderabschnitt (12) horizontal, gefördert wird.

6. Verfahren nach einem der Ansprüche 1 bis 5, **dadurch gekennzeichnet, dass** die Artikel aus dem Artikelmassenstrom (18) mittels einer Entnahmevorrichtung (11) an einem Arm eines Knickarm-Roboters (10) mit wenigstens vier Bewegungsfreiheitsgraden, insbesondere fünf oder sechs Bewegungsfreiheitsgraden, entnommen werden.

7. Verfahren nach Anspruch 6, **dadurch gekennzeichnet, dass** der Knickarm-Roboter (10) als, vorzugsweise mobiler und nicht-ortsfest ausgebildeter, Roboter (10) an einem Förderabschnitt (12) eines, vorzugsweise linear fördernden, Förderers für eine vorbestimmte Zeitdauer angeordnet wird.

8. Verfahren nach Anspruch 6 oder 7, **dadurch gekennzeichnet, dass** bei Anordnung des Knickarm-Roboters (10) an einen Förderabschnitt (12) anhand eines Referenzpunkts (13) zu diesem Förderabschnitt (12) der Knickarm-Roboter zur Steuerung der Bewegungsführung der an einem Armende angeordneten Entnahmevorrichtung (11) entsprechende Bewegungssteuerbefehle erhält.

9. Verfahren nach Anspruch 8, **dadurch gekennzeichnet, dass** nach Erhalt der Bewegungssteuerbefehle die Entnahmevorrichtung (11) zum Artikelmassenstrom (18) ausgerichtet und/oder an den Artikelmassenstrom (18) angenähert wird und parallel zum Artikelmassenstrom (18) geführt wird.

10. Verfahren nach einem der Ansprüche 1 bis 9**, dadurch gekennzeichnet, dass** die Artikel mittels einer als Greifer (11) und/oder mit einer Saugeinrichtung ausgebildeten Entnahmevorrichtung (11) aus dem Artikelmassenstrom (18) entnommen werden.

11. Verwendung eines Knickarm-Roboters (10) zur Entnahme von einzelnen stabförmigen Artikeln der Tabak verarbeitenden Industrie, insbesondere Filterzigaretten, aus einem Artikelmassenstrom (10), wobei das Verfahren zur Entnahme von einzelnen stabförmigen Artikeln gemäß einem der Ansprüche 1 bis 10 ausgeführt wird.
